# EUROPÄISCHE PATENTSCHRIFT

(11) **EP 3 686 053 B1**
(45) Veröffentlichungstag und Bekanntmachung des Hinweises auf die Patenterteilung: **29.09.2021**
(21) Anmeldenummer: 20153188.6
(22) Anmeldetag: 22.01.2020
(51) Int. Cl.: B60P 1/02, B66F 9/06, B66F 9/075, B66F 9/065

(54) **FAHRZEUG ZUM ANHEBEN, TRANSPORTIEREN UND ABSENKEN VON LADUNGSTRÄGERN**
VEHICLE FOR LIFTING, TRANSPORTING AND LOWERING LOAD CARRIERS
VÉHICULE DE LEVAGE, DE TRANSPORT ET D'ABAISSEMENT DES PORTEURS DE CHARGE

(30) Priorität: 25.01.2019 DE 102019101857
(43) Veröffentlichungstag der Anmeldung: 29.07.2020
(73) Patentinhaber: FRAUNHOFER-GESELLSCHAFT zur Förderung der angewandten Forschung e.V., 80686 München (DE)
(72) Erfinder: Behling, Jan, 80686 München (DE); Rotgeri, Mathias, 80686 München (DE)
(74) Vertreter: Meinke, Jochen

(56) Entgegenhaltungen:
- WO-A1-2018/130315
- DE-A1- 3 543 429
- US-A1- 2018 251 145
- US-B2- 7 543 671

## Beschreibung

Die Erfindung betrifft ein Fahrzeug mit wenigstens zwei Achsen mit jeweils wenigstens einem Rad zum Anheben, Transportieren und Absenken von Ladungsträgern, wobei eine erste Achse in einem Fahrgestell gelagert ist, wobei Hubelemente zum Anheben und Absenken der Ladungsträger vorgesehen sind, wobei der Abstand der zweiten Achse gegenüber der ersten Achse in horizontaler Fahrzeuglängsrichtung veränderbar ist und wobei die Hubelemente durch die Veränderung des Abstandes der zweiten Achse zur ersten Achse angehoben oder abgesenkt werden. Unter dem Begriff Ladungsträger soll im Rahmen der Erfindung auch ein einzelnes zu transportierendes Objekt verstanden werden.

Fahrzeuge zum Transport von Ladungsträgern werden vor allem im Bereich der Logistik vielfältig eingesetzt. Dabei werden vorzugsweise automatische, fahrerlose Transportfahrzeuge verwendet. Die Übergabe, d.h. die Aufnahme bzw. die Abgabe des jeweiligen Ladungsträgers auf das bzw. vom Fahrzeug hängt bei den bisherigen Fahrzeugen von der Ausgestaltung der Übergabestationen (Fördertechnik, Arbeitsstationen) ab, d.h. diese Fahrzeuge sind für die jeweilige Interaktion mit der jeweiligen Fördertechnik bzw. mit der jeweiligen Arbeitsstation ausgelegt.

Häufig besteht jedoch die Notwendigkeit, Lasten bzw. Ladungsträger vor dem Transport von einer Bodenfläche anzuheben oder nach dem Transport auf eine Bodenfläche abzusetzen. Zu diesem Zweck sind allgemein Fahrzeuge nach Art eines Gabelstaplers bekannt, die neben dem eigentlichen Fahrantrieb eine zusätzliche Hubeinrichtung benötigen. Diese Fahrzeuge sind deshalb aufwendig und teuer.

Aus GB 262 560 A ist ein Fahrzeug mit den Merkmalen des Oberbegriffs des Patentanspruchs 1 bekannt, das als Pferdeanhänger zum Transportieren eines Heuschobers ausgebildet ist. Der Anhänger weist zwei Achsen mit jeweils einem Rad auf, wobei die Achsen in einem umgekehrt V-förmigen Rahmen gelagert sind, der zwei in einem oberen Schwenkgelenk schwenkbar miteinander verbundene Rahmenschenkel aufweist. Am oberen Schwenkgelenk sind hakenförmige Hubelemente aufgehängt, die durch eine Verringerung des Schwenkwinkels zwischen den beiden Rahmenschenkeln und dadurch einer Verringerung des Abstandes der beiden Achsen in Fahrzeuglängsrichtung angehoben werden. Diese hakenförmigen Hubelemente werden vor dem Anheben des Heuschobers manuell seitlich an der Unterseite des Heuschobers angebracht, anschließend werden die beiden Rahmenschenkel manuell um ein gewisses Maß zusammengeschwenkt, was entsprechend umständlich und kraftaufwendig ist. Dadurch werden die hakenförmigen Hubelemente und damit der Heuschober angehoben. Dieser Hubvorgang wird durch zusätzliche Zinken unterstützt, die fest an den Rahmenschenkeln angeordnet sind. In angehobener Position müssen die Rahmenschenkel in der eingeschwenkten Transportposition manuell mittels einer zusätzlichen, horizontal verlaufenden Sicherungskette gesichert werden. Die Bedienung dieses Anhängers ist somit nur manuell möglich und sehr aufwendig, da drei verschiedene Elemente (Haken, Zinken, Kette) erforderlich sind. US2018/251145 A1 offenbart den Oberbegriff des Anspruchs 1.

Aufgabe der Erfindung ist es deshalb, ein Fahrzeug zur Verfügung zu stellen, das mit möglichst geringem Aufwand die Aufnahme und Abgabe von Ladungsträgern von einer bzw. auf eine Bodenfläche ermöglicht.

Diese Aufgabe wird bei einem Fahrzeug der eingangs bezeichneten Art erfindungsgemäß dadurch gelöst, dass das wenigstens eine Rad der ersten Achse von einem Antriebsmotor antreibbar ist, der auf dem Fahrgestell angeordnet ist, und dass wenigstens ein Hubelement durch die Veränderung des Abstandes der zweiten Achse zur ersten Achse horizontal nach innen oder außen in Fahrzeugquerrichtung verlagert wird.

Erfindungsgemäß wird somit ein vorzugsweise automatisches Fahrzeug zur Verfügung stellt, das keine aufwendige zusätzliche Hubeinrichtung benötigt, sondern es wird einerseits eine Horizontalverschiebung der zweiten Achse gegenüber der ersten Achse in Fahrzeuglängsrichtung in eine vertikale Hubbewegung umgesetzt. Das Fahrzeug hat dadurch die Fähigkeit, eine Last an definierten Lastaufnahmepunkten aufnehmen, transportieren und absetzen zu können. Dadurch ist eine Lastaufnahme vom Boden mit wenig Aktoren möglich. Das wenigstens eine Hubelement führt dabei andererseits nicht nur eine Hubbewegung aus, sondern zusätzlich eine Horizontalbewegung in Fahrzeugquerrichtung, um bei der Lastaufnahme seitlich an den Ladungsträger heranzufahren und sich bei der Lastabgabe wieder seitlich von diesem zu entfernen, wodurch eine sichere, automatische Aufnahme der Ladungsträger gewährleistet ist, auch wenn der Ladungsträger vor einer Wand abgestellt ist.

In bevorzugter Ausgestaltung ist dabei vorgesehen, dass wenigstens die zweite Achse zwei getrennte Achsabschnitte mit jeweils einem Rad aufweist. Das Fahrzeug kann dann so gestaltet sein, dass die Hubelemente in Fahrzeugquerrichtung gesehen weiter innen angeordnet sind als die beiden getrennten Achsabschnitte, so dass das Fahrzeug den jeweiligen Ladungsträger sozusagen von außen umgreifen kann, d.h. der Ladungsträger befindet sich im Bereich zwischen den getrennten Achsabschnitten.

Dabei ist im Normalfall vorgesehen, dass an jeder Seite wenigstens ein Hubelement angeordnet ist.

Zur Horizontalverschiebung der zweiten Achse gegenüber der ersten Achse kann nach einer ersten Ausgestaltung vorgesehen sein, dass der zweiten Achse wenigstens ein horizontal wirkender Verstellantrieb zugeordnet ist. Dieser Verstellantrieb kann ein eigener Antrieb sein, er kann aber auch über geeignete Getriebemittel mit dem Antriebsmotor gekoppelt sein.

Vorzugsweise alternativ ist vorgesehen, dass die Räder der zweiten Achse jeweils mit einer Feststelleinrichtung versehen sind. Wenn die Feststelleinrichtung für die Räder der zweiten Achse aktiv ist, kann die Horizontalverschiebung der zweiten Achse gegenüber der ersten Achse dadurch bewirkt werden, dass die Räder der ersten Achse vom Antriebsmotor angetrieben werden, entweder in Vorwärts- oder in Rückwärtsrichtung. Dadurch ist die horizontale Verschiebbarkeit der zweiten Achse gegenüber der ersten Achse ohne einen zusätzlichen Antriebsmotor möglich, es ist nur ein Antriebsmotor für das gesamte Fahrzeug erforderlich.

In einer konstruktiv besonders bevorzugten Ausgestaltung ist vorgesehen, dass die zweite Achse in zwei seitlich voneinander beabstandeten umgekehrt V-förmigen Tragelementen gelagert ist, wobei jedes Tragelement zwei an den oberen Enden über ein Schwenkgelenk schwenkbar miteinander verbundene Tragarme aufweist, wobei der jeweilige erste Tragarm mit seinem unteren Ende mit dem Fahrgestell verbunden ist und die zweite Achse in den unteren Enden der beiden zweiten Tragarme gelagert ist, wobei an jedem Tragelement wenigstens ein Hubelement zum Anheben und Absenken angeordnet ist, welches durch Veränderung des Schwenkwinkels zwischen dem jeweiligen ersten und zweiten Tragarm anheb- oder absenkbar ist. Zur Veränderung des horizontalen Abstandes zwischen der zweiten Achse und der ersten Achse wird dabei der Schwenkwinkel zwischen den jeweiligen Tragarmen verändert. Dadurch werden gleichzeitig die Hubelemente angehoben oder abgesenkt.

Bevorzugt ist vorgesehen, dass das jeweilige Schwenkgelenk jeweils mit einer Feststelleinrichtung versehen ist. Die Feststelleinrichtungen, beispielsweise Bremsen, sind dann während der Fahrt aktiviert und werden zum Anheben bzw. Absenken, d.h. zur Aufnahme oder Abgabe der Ladungsträger freigegeben.

In weiterer bevorzugter Ausgestaltung ist vorgesehen, dass an jedem Tragarm jeweils ein Tragsteg befestigt ist, welcher sich in Richtung zum anderen Tragarm desselben Tragelementes erstreckt, wobei ein Hubelement mit wenigstens einem Tragsteg verbunden ist.

In einer ersten Ausgestaltung ist dabei vorgesehen, dass die Tragstege am freien Ende jeweils einen im Wesentlichen vertikal verlaufenden Führungszapfen aufweisen und jedes Hubelement an seinen beiden Enden jeweils eine Führungsaussparung aufweist, wobei die Führungszapfen der Tragstege einer Seite in die Führungsaussparungen eines Hubelementes eingreifen.

Um bei der vorbeschriebenen Ausführungsform auch eine horizontale Bewegung der Hubelemente zu ermöglichen, ist weiterhin bevorzugt vorgesehen, dass die Führungsaussparungen sich wenigstens bereichsweise sowohl in Fahrzeuglängsrichtung als auch in Fahrzeugquerrichtung erstrecken.

In einer alternativen Ausführungsform ist vorgesehen, dass die Tragstege einer Seite sich endseitig überlappen und wenigstens ein Tragstegende auf der dem anderen Tragstegende zugewandten Seite eine Abschrägung aufweist. Die Abschrägung ist bevorzugt so ausgerichtet, dass der Tragsteg mit der Abschrägung bei einer Horizontalverschiebung in Fahrzeuglängsrichtung sowohl vertikal als auch horizontal in Fahrzeugquerrichtung bewegt wird.

In weiterer Ausgestaltung kann das Fahrzeug bevorzugt in Fahrzeuglängsrichtung teleskopierbar ausgebildete Elemente aufweisen. Die teleskopierbar ausgebildeten Elemente können jeweils mit einer Feststelleinrichtung versehen sein.

Bei einer Ausführungsform mit Tragstegen können die teleskopierbar ausgebildeten Elemente von den Tragstegen gebildet ein.

Bei der vorbeschriebenen Ausgestaltung kann weiterhin vorgesehen sein, dass das jeweilige Hubelement an den zugeordneten Tragelementen aufgehängt und schwenkbar an einem Tragsteg angelenkt ist.

Schließlich ist bevorzugt vorgesehen, dass wenigstens eine Achse als Lenkachse ausgebildet ist.

Die Erfindung ist nachstehend anhand der Zeichnung beispielhaft näher erläutert.

Diese zeigt jeweils in schematischer Darstellung in
- Fig. 1: ein Fahrzeug nach einer ersten Ausführungsform vor Lastaufnahme,
- Fig. 2: das Fahrzeug nach Fig. 1 nach Lastaufnahme,
- Fig. 3: eine Seitenansicht der Fig. 1 in abgewandelter Ausgestaltung,
- Fig. 4: eine Seitenansicht der Fig. 2 in abgewandelter Ausgestaltung,
- Fig. 5: ein Fahrzeug nach einer zweiten Ausführungsform vor Lastaufnahme,
- Fig. 6: das Fahrzeug nach Fig. 5 nach Lastaufnahme,
- Fig. 7: ein Fahrzeug nach einer dritten Ausführungsform vor Lastaufnahme,
- Fig. 8: das Fahrzeug nach Fig. 7 nach Lastaufnahme,
- Fig. 9: eine Seitenansicht der Fig. 7,
- Fig. 10: eine Seitenansicht der Fig. 8,
- Fig. 11: eine Vorderansicht der Fig. 7 und
- Fig. 12: eine Vorderansicht der Fig. 8.

Ein erfindungsgemäßes Fahrzeug 1 dient zum Anheben, Transportieren und Absenken eines Ladungsträgers 2, der bei den Ausführungsbeispielen kastenartig dargestellt ist, aber selbstverständlich auch eine andere Form (z.B. palettenförmig) aufweisen kann. Unter einem solchen Ladungsträger 2 soll im Rahmen der Erfindung auch ein einzelnes zu transportierendes Objekt verstanden werden, der dargestellte kastenartige Ladungsträger 2 dient selbst zur Aufnahme verschiedener Objekte, die nicht dargestellt sind.

Das vorzugsweise selbstfahrende, automatische Fahrzeug 1 weist zwei Achsen auf, nämlich eine erste Achse 3 und eine zweite Achse, die vorzugsweise von zwei getrennten Achsabschnitten 4, 5 gebildet ist. Auf der ersten Achse 3 ist beidseitig jeweils ein Rad 6 angeordnet, auf jedem Achsabschnitt 4, 5 der zweiten Achse ist ebenfalls jeweils ein Rad 7, 8 angeordnet. Anders als schematisch dargestellt kann eine der Achsen eine Lenkachse sein, es kann auch nur ein Rad 6 vorgesehen sein.

Die erste Achse 3 ist in einem allgemein mit 9 bezeichneten Fahrgestell des Fahrzeuges 1 gelagert, was nicht näher dargestellt ist. Die Räder 6 der ersten Achse 3 sind von einem nicht dargestellten Antriebsmotor antreibbar, der auf dem Fahrgestell 9 angeordnet ist. Das Fahrzeug 1 weist darüber hinaus Hubelemente zum Anheben und Absenken des jeweiligen Ladungsträgers 2 auf, die nachfolgend näher beschrieben werden. In der nachfolgenden Beschreibung wird in Analogie zum Aufbau eines Gabelstaplers die erste Achse 3 als Hinterachse und die zweite Achse als Vorderachse angesehen.

Das Fahrzeug 1 weist eine durch einen Doppelpfeil 10 angedeutete Fahrzeuglängsrichtung und eine durch einen Doppelpfeil 11 angedeutete Fahrzeugquerrichtung auf.

Wesentlich für die Gestaltung des Fahrzeuges 1 ist, dass der Abstand der zweiten Achse (Achsabschnitte 4 und 5) gegenüber der ersten Achse 3 in horizontaler Fahrzeuglängsrichtung 10 veränderbar ist und dass die Hubelemente durch die Veränderung des Abstandes der zweiten Achse (Achsabschnitte 4 und 5) zur ersten Achse 3 anheb- oder absenkbar ausgebildet sind.

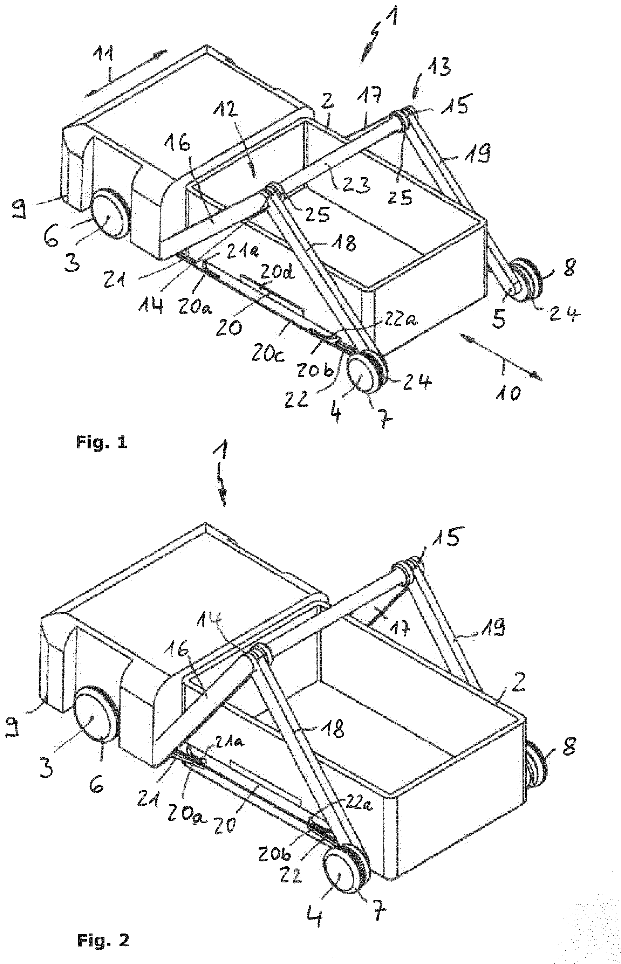

Dazu ist beim Ausführungsbeispiel nach den Fig. 1 bis 4 die zweite Achse (die Achsabschnitte 4 und 5) in zwei seitlich voneinander beabstandeten umgekehrt V-förmigen Tragelementen 12, 13 gelagert, wobei jedes Tragelement 12, 13 zwei an den oberen Enden über ein Schwenkgelenk 14, 15 schwenkbar miteinander verbundene Tragarme aufweist, wobei der jeweilige erste Tragarm 16, 17 mit seinem unteren Ende verschwenkbar am Fahrgestell 9 angelenkt ist und die zweite Achse, d.h. die jeweiligen Achsabschnitte 4, 5, in den unteren Enden der beiden zweiten Tragarme 18, 19 gelagert sind. An jedem Tragelement 12, 13 ist jeweils wenigstens ein Hubelement 20 zum Anheben und Absenken des Ladungsträgers 2 angeordnet. Dieses Hubelement 20 ist durch Veränderung des Schwenkwinkels zwischen dem jeweiligen ersten Tragarm 16, 17 und dem jeweiligen zweiten Tragarm 18, 19 anheb- oder absenkbar ausgebildet.

Dazu ist beim Ausführungsbeispiel nach den Fig. 1 bis 4 an jedem Tragarm 16, 17, 18, 19 jeweils ein Tragsteg 21, 22 befestigt, der sich in Richtung zum anderen Tragarm desselben Tragelementes 12, 13 erstreckt. Die Tragstege der beiden Tragarme 17 und 19 sind nicht dargestellt, aber entsprechend angeordnet. Das jeweilige Hubelement 20 ist bei dieser Ausführungsform in nachfolgend näher beschriebener Weise mit beiden Tragstegen 21, 22 verbunden. Die Tragelemente 12 und 13 können, wie dargestellt, im Bereich der Schwenkgelenke 14 und 15 durch ein stangenförmiges Verbindungselement 23 miteinander verbunden sein. Dieses Verbindungselement 23 kann aber auch entfallen.

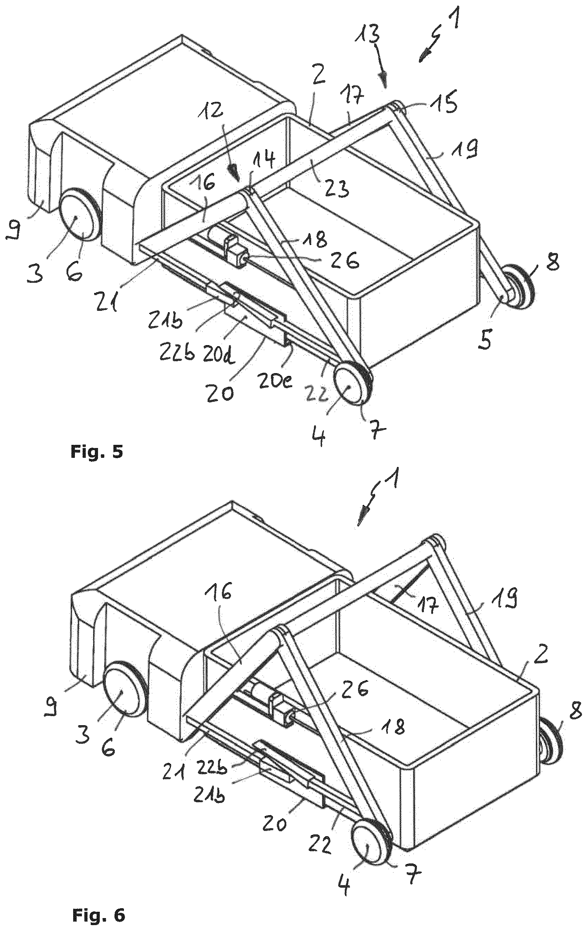

Die Tragstege 21 und 22 weisen jeweils am freien Ende einen im Wesentlichen vertikal verlaufenden Führungszapfen 21a, 22a auf. Das Hubelement 20 weist in Fahrzeuglängsrichtung 10 gesehen an beiden Enden jeweils eine Führungsaussparung 20a, 20b auf, wobei die Führungszapfen 21a, 22a der Tragstege 21, 22 einer Fahrzeugseite in die Führungsaussparungen 20a, 20b eines Hubelementes 20 eingreifen. Die Führungsaussparungen 20a, 20b des Hubelementes 20 sind in einem horizontalen Bereich 20c des Hubelementes 20 ausgebildet. Dieser horizontale Bereich 20c geht zur Fahrzeuginnenseite hin in einen vertikalen Stegabschnitt 20d über. An die Unterkante des Stegabschnittes 20d kann sich ein horizontaler Aufnahmeabschnitt anschließen, der nicht erkennbar ist und der zum Untergreifen der Unterseite des Ladungsträgers 2 dient. Ein solcher horizontaler Aufnahmeabschnitt 20e ist z.B. in Fig. 5 dargestellt.

Die Führungsaussparungen 20a und 20b erstrecken sich vorzugsweise bereichsweise wenigstens sowohl in Fahrzeuglängsrichtung 10 als auch in Fahrzeugquerrichtung 11. Jedem Rad 7, 8 der zweiten Achse bzw. der Achsabschnitte 4, 5 ist beim Ausführungsbeispiel nach den Fig. 1 und 2 jeweils eine Feststelleinrichtung 24, z.B. eine Bremse, zugeordnet, auch die Schwenkgelenke 14, 15 sind jeweils mit einer Feststelleinrichtung 25 versehen.

Die Funktionsweise des Fahrzeuges 1 nach den Fig. 1 und 2 ist wie folgt:
Wenn sich ein Ladungsträger 2 auf einer Bodenfläche befindet (Fig. 1) und vom Fahrzeug 1 angehoben und nachfolgend transportiert werden soll, fährt das Fahrzeug 1 vorzugsweise vollautomatisch in die in Fig. 1 dargestellte Position, so dass sich der Ladungsträger 2 im Inneren des Fahrzeuges 1 zwischen den beiden Tragelementen 12, 13 befindet. In dieser Lage sind die Hubelemente 20 in Fahrzeugquerrichtung 11 gesehen so weit nach außen verfahren, dass die vertikalen Stegabschnitte 20d noch beabstandet zu den Seitenrändern des Ladungsträgers 2 sind. Diese vertikale Stegabschnitte 20d können auch als Klemmbacken ausgebildet sein, dann sind die vorerwähnten unteren horizontalen Aufnahmeabschnitte nicht vorhanden. In dieser in Fig. 1 dargestellten Lage befinden sich die Führungszapfen 21a, 22a in den Führungsaussparungen 20a, 20b jeweils am äußersten (Längs-)Ende und in Fahrzeugquerrichtung 11 gesehen am weitesten innen.

Die Feststelleinrichtungen 25 der Schwenkgelenke 14 und 15 werden nun freigegeben, so dass sich die Schwenkgelenke 14 und 15 drehen können und die Feststelleinrichtungen 24 der Räder 4 und 5 werden aktiviert, so dass sich die Räder 4 und 5 nicht drehen können. Anschließend wird der Antriebsmotor betätigt und die Räder 6 der ersten Achse 3 drehen sich in Vorwärtsrichtung, so dass sich der Abstand zwischen der ersten Achse 3 und der zweiten Achse, also den Achsabschnitten 4 und 5 in horizontaler Fahrzeuglängsrichtung 10 verringert und dabei die Tragarme 16, 18 bzw. 17, 19 aufeinander zu schwenken. Dadurch bewegen sich die Tragstege 21 und 22 zwangsgeführt in den Führungsaussparungen 20a und 20b. Da die Tragstege 21 und 22 fest mit den zugeordneten Tragarmen 16, 18 verbunden sind, führt dies dazu, dass sich die Führungszapfen 21a und 22a anheben und dadurch bedingt auch die Hubelemente 20. Außerdem wird der jeweilige vertikale Stegabschnitt 20d der Hubelemente 20 aufgrund der Gestaltung der Führungsaussparungen 20a, 20b in Fahrzeugquerrichtung 11 gesehen nach innen bewegt, so dass einerseits sich die vertikalen Stegabschnitte 20d ggf. klemmend an den Rändern des Ladungsträgers 2 anlegen und die horizontalen Aufnahmeabschnitte 20e den Ladungsträger 2 untergreifen und andererseits die Hubelemente 20 und damit der Ladungsträger 2 angehoben werden.

Anschließend werden die Feststelleinrichtungen 25 der Schwenkgelenke 14, 15 aktiviert und die Feststelleinrichtungen 24 der Räder 7 und 8 freigegeben, so dass das Fahrzeug 1 mit angehobenem Ladungsträger 2 fahren kann.

Zum Absenken des Ladungsträgers 2, vorzugsweise an einem anderen Ort, werden die Feststelleinrichtungen 24 der Räder 7 und 8 wieder aktiviert, die Feststelleinrichtungen 25 der Schwenkgelenke 14 und 15 werden freigegeben und die Räder 6 der ersten Achse 3 werden vom Antriebsmotor rückwärts angetrieben, so dass sich das Fahrzeug 1 wieder in der in Fig. 1 dargestellten Position befindet. Dadurch werden die Hubelemente 20 abgesenkt und nach außen bewegt, so dass der Ladungsträger 2 wieder freigegeben wird.

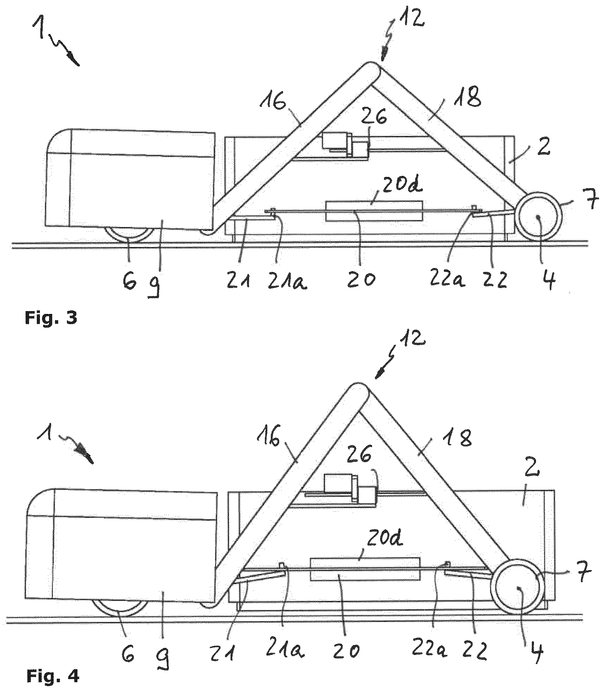

In den Fig. 3 und 4 ist eine Abwandlung der Fig. 1 und 2 dargestellt. Dabei ist zwischen dem jeweiligen ersten Tragarm 16, 17 und dem jeweiligen zweiten Tragarm 18, 19 jeweils ein horizontal wirkender Verstellantrieb 26 vorgesehen, der unabhängig vom Antriebsmotor ist. Bei dieser Ausführungsform dient der Verstellantrieb 26 dazu, den Schwenkwinkel zwischen dem ersten Tragarm 16, 17 und dem zweiten Tragarm 18, 19 jeweils zwischen der Transportposition und der Anheb- und Absenkposition zu verändern. Wenn ein solcher zusätzlicher Verstellantrieb 26 vorgesehen ist, können die Feststelleinrichtungen 24 und 25 entfallen.

In den Fig. 5 und 6 ist eine zweite Ausführungsform eines erfindungsgemäßen Fahrzeuges 1 dargestellt. Dabei sind, sofern gleiche oder ähnliche Teile betroffen sind, dieselben Bezugszeichen wie in den vorangehenden Figuren verwandt.

Auch bei diesem Fahrzeug 1 sind zwei umgekehrt V-förmige Tragelemente 12, 13 mit ersten Tragarmen 16, 17 und zweiten Tragarmen 18, 19 vorgesehen, die über Schwenkgelenke 14, 15 z.B. mit Hilfe eines Verstellantriebes 26 verschwenkbar sind.

Bei dieser Ausführungsform sind jedoch die Hubelemente 20 und die Tragstege 21, 22 anders ausgebildet. Die Tragstege 21 und 22 sind so lang, dass sich die Tragstege 21, 22 an einer Seite endseitig überlappen und wenigstens ein Tragstegende, z.B. das Tragstegende 22b des Tragsteges 22, auf der dem anderen Tragstegende 21b zugewandten Seite eine Abschrägung aufweist. Beim dargestellten Ausführungsbeispiel ist dabei die Abschrägung auf der Unterseite des Tragstegendes 22b ausgebildet, die Abschrägung ist dabei so ausgerichtet, dass sie bei Verringerung des Abstandes der zweiten Achse zur ersten Achse 3 dazu führt, dass einerseits das Tragstegende 22b durch Verschieben in Fahrzeuglängsrichtung 10 auf dem Tragstegende 21b vertikal nach oben bewegt wird und andererseits in Fahrzeugquerrichtung 11 gesehen nach innen. Wie dargestellt kann auch das Tragstegende 21b eine zur Abschrägung am Tragstegende 22b komplementäre Abschrägung an der Oberseite aufweisen. Dabei ist das jeweilige Hubelement 20 am Tragstegende 22b befestigt, so dass es der vorbeschriebenen Bewegung des Tragstegendes 21b folgt, also einerseits vertikal anhebbar und andererseits in Fahrzeugquerrichtung 11 nach innen verlagerbar ist.

Ansonsten unterscheidet sich der Funktionsablauf dieses Fahrzeuges 1 nicht gegenüber demjenigen nach den Fig. 1 bis 4.

Es ist offensichtlich, dass anstelle des Verstellantriebes 26 auch bei der Ausführungsform nach den Fig. 5 und 6 Feststelleinrichtungen 24 und 25 vorgesehen sein können.

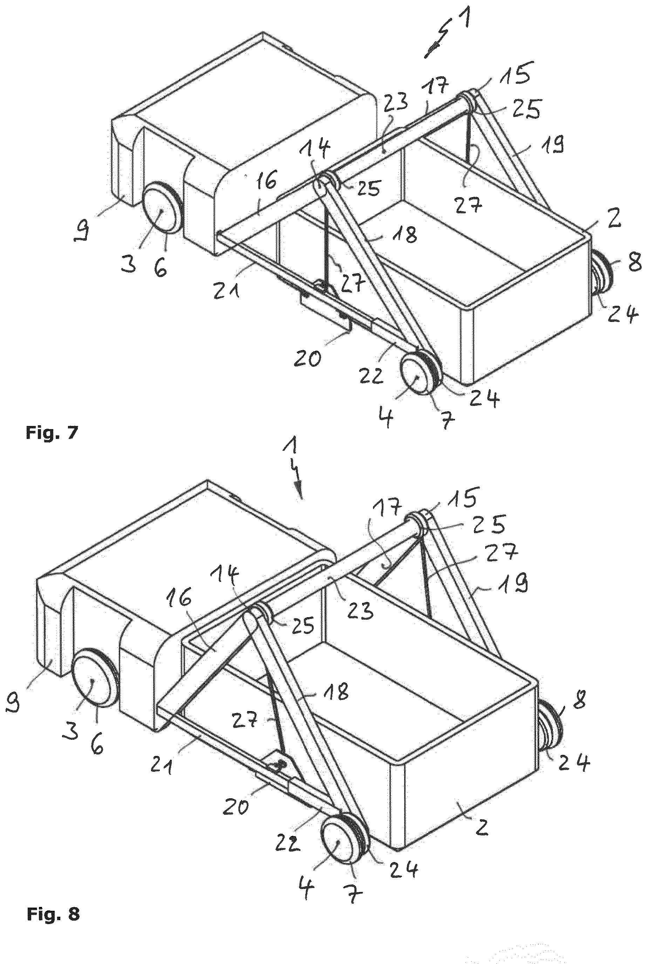

In den Fig. 7 bis 12 ist eine dritte Ausführungsform eines erfindungsgemäßen Fahrzeuges 1 dargestellt, wobei wiederum dieselben Bezugszeichen für gleiche oder ähnliche Teile wie in den vorangehenden Figuren verwandt sind.

Bei dieser Ausführungsform weist das Fahrzeug 1 in Fahrzeuglängsrichtung 10 gesehen teleskopierbar ausgebildete Elemente auf, die von den Tragstegen 21, 22 gebildet sind. Beim Verändern des Abstandes zwischen der zweiten Achse (Achsabschnitte 4 und 5) gegenüber der ersten Achse 3 und damit der Veränderung des Schwenkwinkels zwischen den Tragarmen 16 und 18 sowie 17 und 19 fährt der Tragsteg 21 mehr oder weniger teleskopisch in den Tragsteg 22 ein. Selbstverständlich wäre auch eine umgekehrte Ausbildung möglich.

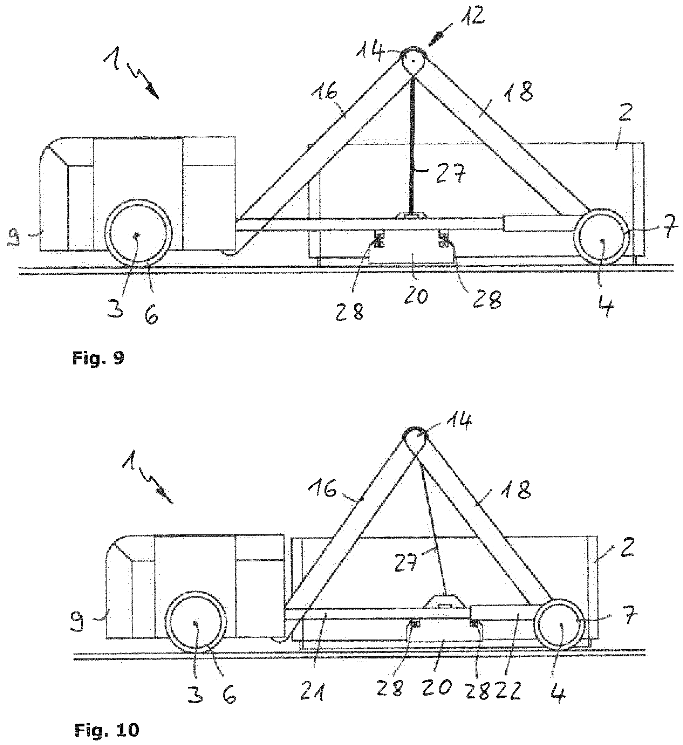

Die Hubelemente 20 sind bei dieser Ausführungsform an dem zugeordneten Tragelement 12, 13 aufgehängt, und zwar über ein Seil 27 oder dgl., das mit einem Ende z.B. im Bereich der Schwenkgelenke 14, 15 und mit dem anderen Ende am jeweiligen Hubelement 20 angelenkt ist. Außerdem ist das jeweilige Hubelement 20 über in den Fig. 9 bis 12 angedeutete Schwenkhebel 28 schwenkbar an einem Tragsteg, z.B. am Tragsteg 21, angelenkt.

Wenn der Abstand der zweiten Achse (Achsabschnitte 4 und 5) in Fahrzeuglängsrichtung 10 gegenüber der ersten Achse 3 verringert wird und sich der Schwenkwinkel zwischen den Tragarmen 16, 18 sowie 17, 19 verringert und sich dadurch die Schwenkgelenke 14, 15 und die Anlenkpunkte der Seile 27 im Wesentlichen vertikal nach oben bewegen, werden aufgrund der vorbeschriebenen Gestaltung die Hubelemente 20 angehoben und aufgrund der schwenkbaren Anlenkung über die Schwenkhebel 28 am Tragsteg 21 nach innen bewegt, um unter dem Ladungsträger 2 zur Anlage zu kommen.

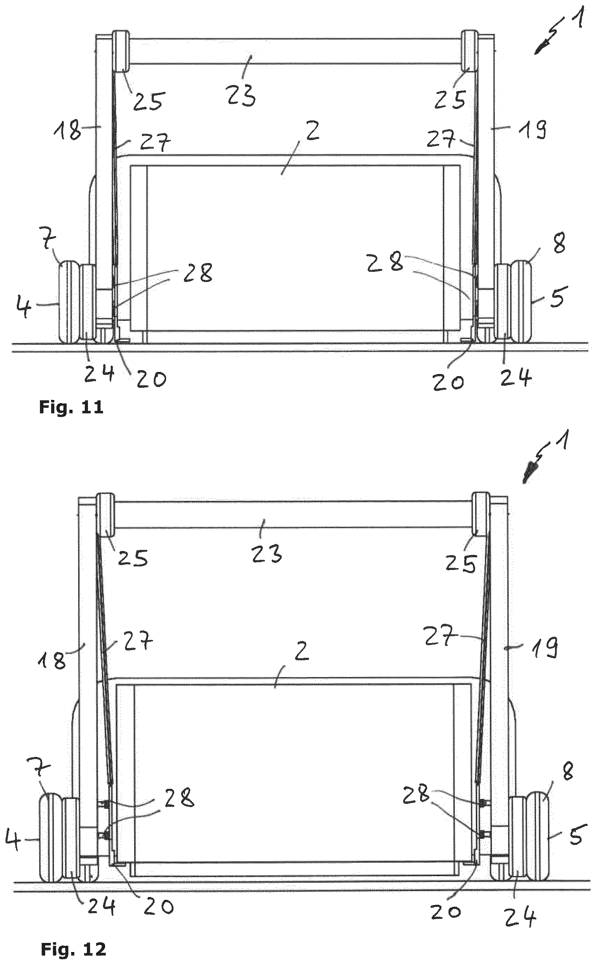

Anstelle der in den Fig. 7 und 12 dargestellten Feststelleinrichtungen 24 und 25 können, wie bei der Ausführungsform nach den Fig. 5 und 6, auch Verstellantriebe 26 vorgesehen sein.

Natürlich ist die Erfindung nicht auf die dargestellten Ausführungsbeispiele beschränkt. Der Erfindungsrahmen wird durch die Ansprüche definiert. So kann die horizontale Verstellbarkeit der zweiten Achse gegenüber der ersten Achse 3 auch anders ausgeführt werden, es ist nicht erforderlich, dass umgekehrt V-förmige Tragelemente 12, 13 vorgesehen sind, stattdessen können auch in Fahrzeuglängsrichtung gesehen teleskopierbare Elemente vorgesehen sein, denen eine Verstell- und Feststelleinrichtung zugeordnet ist. Das Fahrzeug 1 weist selbstverständlich nicht dargestellte Aktoren und ggf. Sensoren auf.

### Bezugszeichenliste:

- 1: Fahrzeug
- 2: Ladungsträger
- 3: erste Achse
- 4, 5: Achsabschnitte der zweiten Achse
- 6: Räder der ersten Achse
- 7, 8: Räder der zweiten Achse
- 9: Fahrgestell
- 10: Fahrzeuglängsrichtung
- 11: Fahrzeugquerrichtung
- 12, 13: umgekehrt V-förmiges Tragelement
- 14, 15: Schwenkgelenk
- 16, 17: erster Tragarm
- 18, 19: zweiter Tragarm
- 20: Hubelement
- 20a, 20b: Führungsaussparung
- 20c: horizontaler Bereich
- 20d: vertikaler Stegabschnitt
- 20e: horizontaler Aufnahmeabschnitt
- 21, 22: Tragsteg
- 21a, 22a: Führungszapfen
- 21b, 22b: Tragstegende
- 23: Verbindungselement
- 24, 25: Feststelleinrichtung
- 26: Verstellantrieb
- 27: Seil
- 28: Schwenkhebel

## Patentansprüche

1. Fahrzeug mit wenigstens zwei Achsen mit jeweils wenigstens einem Rad zum Anheben, Transportieren und Absenken von Ladungsträgern (2), wobei eine erste Achse (3) in einem Fahrgestell (9) gelagert ist, wobei Hubelemente (20) zum Anheben und Absenken der Ladungsträger (2) vorgesehen sind, wobei der Abstand der zweiten Achse (4, 5) gegenüber der ersten Achse (3) in horizontaler Fahrzeuglängsrichtung (10) veränderbar ist und wobei die Hubelemente (20) durch die Veränderung des Abstandes der zweiten Achse (4, 5) zur ersten Achse (3) angehoben oder abgesenkt werden, und wobei das wenigstens eine Rad (6) der ersten Achse (3) von einem Antriebsmotor antreibbar ist, der auf dem Fahrgestell (9) angeordnet ist, **dadurch gekennzeichnet dass** wenigstens ein Hubelement (20) durch die Veränderung des Abstandes der zweiten Achse (4, 5) zur ersten Achse (3) horizontal nach innen oder außen in Fahrzeugquerrichtung (11) verlagert wird.

2. Fahrzeug nach Anspruch 1,
**dadurch gekennzeichnet,**
**dass** wenigstens die zweite Achse zwei getrennte Achsabschnitte (4, 5) mit jeweils einem Rad (7, 8) aufweist.

3. Fahrzeug nach Anspruch 1 oder 2,
**dadurch gekennzeichnet,**
**dass** an jeder Seite wenigstens ein Hubelement (20) vorgesehen ist.

4. Fahrzeug nach einem oder mehreren der Ansprüche 1 bis 3,
**dadurch gekennzeichnet,**
**dass** der zweiten Achse (4, 5) wenigstens ein horizontal wirkender Verstellantrieb (26) zugeordnet ist.

5. Fahrzeug nach einem oder mehreren der Ansprüche 1 bis 4,
**dadurch gekennzeichnet,**
**dass** die Räder (7, 8) der zweiten Achse (4, 5) jeweils mit einer Feststelleinrichtung (24) versehen sind.

6. Fahrzeug nach einem oder mehreren der Ansprüche 1 bis 5,
**dadurch gekennzeichnet,**
**dass** die zweite Achse (4, 5) in zwei seitlich voneinander beabstandeten umgekehrt V-förmigen Tragelementen (12, 13) gelagert ist, wobei jedes Tragelement (12, 13) zwei an den oberen Enden über ein Schwenkgelenk (14, 15) schwenkbar miteinander verbundene Tragarme (16, 18; 17, 19) aufweist, wobei der jeweilige erste Tragarm (16, 17) mit seinem unteren Ende mit dem Fahrgestell (9) verbunden ist und die zweite Achse (4, 5) in den unteren Enden der beiden zweiten Tragarme (18, 19) gelagert ist, wobei an jedem Tragelement (12, 13) wenigstens ein Hubelement (20) zum Anheben und Absenken angeordnet ist, welches durch Veränderung des Schwenkwinkels zwischen dem jeweiligen ersten und zweiten Tragarm (16, 17; 18, 19) anheb- oder absenkbar ist.

7. Fahrzeug nach Anspruch 6,
**dadurch gekennzeichnet,**
**dass** das jeweilige Schwenkgelenk (14, 15) jeweils mit einer Feststelleinrichtung (25) versehen ist.

8. Fahrzeug nach Anspruch 6 oder 7,
**dadurch gekennzeichnet,**
**dass** an jedem Tragarm (16, 17, 18, 19) jeweils ein Tragsteg (21, 22) befestigt ist, welcher sich in Richtung zum anderen Tragarm (22, 21) desselben Tragelementes (12, 13) erstreckt, wobei ein Hubelement (20) mit wenigstens einem Tragsteg (21, 22) verbunden ist.

9. Fahrzeug nach Anspruch 8,
**dadurch gekennzeichnet,**
**dass** die Tragstege (21, 22) am freien Ende jeweils einen im Wesentlichen vertikal verlaufenden Führungszapfen (21a, 22a) aufweisen und jedes Hubelement (20) an seinen beiden Enden jeweils eine Führungsaussparung (20a, 20b) aufweist, wobei die Führungszapfen (21a, 22a) der Tragstege (21, 22) einer Seite in die Führungsaussparungen (20a, 20b) eines Hubelementes (20) eingreifen.

10. Fahrzeug nach Anspruch 9,
**dadurch gekennzeichnet,**
**dass** die Führungsaussparungen (20a, 20b) sich wenigstens bereichsweise sowohl in Fahrzeuglängsrichtung (10) als auch in Fahrzeugquerrichtung (11) erstrecken.

11. Fahrzeug nach einem oder mehreren der Ansprüche 1 bis 8,
**dadurch gekennzeichnet,**
**dass** die Tragstege (21, 22) einer Seite sich endseitig überlappen und wenigstens ein Tragstegende (22b) auf der dem anderen Tragstegende (21b) zugewandten Seite eine Abschrägung aufweist.

12. Fahrzeug nach einem oder mehreren der Ansprüche 1 bis 11,
**dadurch gekennzeichnet,**
**dass** es in Fahrzeuglängsrichtung (10) teleskopierbar ausgebildete Elemente aufweist.

13. Fahrzeug nach Anspruch 12,
**dadurch gekennzeichnet,**
**dass** die teleskopierbar ausgebildeten Elemente jeweils mit einer Feststelleinrichtung versehen sind.

14. Fahrzeug nach Anspruch 12 oder 13,
**dadurch gekennzeichnet,**
**dass** die teleskopierbar ausgebildeten Elemente von den Tragstegen (21, 22) gebildet sind.

15. Fahrzeug nach Anspruch 14,
**dadurch gekennzeichnet,**
**dass** das jeweilige Hubelement (20) an den zugeordneten Tragelementen (12, 13) aufgehängt und schwenkbar an einem Tragsteg (21, 22) angelenkt ist.

16. Fahrzeug nach einem oder mehreren der Ansprüche 1 bis 15,
**dadurch gekennzeichnet,**
**dass** wenigstens eine Achse (3; 4, 5) als Lenkachse ausgebildet ist.

## Claims

1. Vehicle with at least two axles each with at least one wheel for lifting, transporting and lowering load carriers (2), wherein a first axle (3) is mounted in a chassis (9), wherein lifting elements (20) are provided for lifting and lowering the load carriers (2), wherein the distance of the second axle (4, 5) from the first axle (3) can be varied in the horizontal longitudinal direction (10) of the vehicle and wherein the lifting elements (20) are raised or lowered by varying the distance of the second axle (4, 5) from the first axle (3),
and wherein the at least one wheel (6) of the first axle (3) can be driven by a drive motor which is arranged on the chassis (9), **characterised in that** at least one lifting element (20) is displaced horizontally inwards or outwards in the transverse direction (11) of the vehicle by the change in the distance of the second axle (4, 5) from the first axle (3).

2. Vehicle according to claim 1,
**characterised in that**
at least the second axle has two separate axle portions (4, 5), each having a wheel (7, 8).

3. Vehicle according to claim 1 or 2,
**characterised in that**
at least one lifting element (20) is provided on each side.

4. Vehicle according to one or more of claims 1 to 3,
**characterised in that**
at least one horizontally-acting adjusting drive (26) is associated with the second axle (4, 5).

5. Vehicle according to one or more of claims 1 to 4,
**characterised in that**
the wheels (7, 8) of the second axle (4, 5) are each provided with a locking device (24).

6. Vehicle according to one or more of claims 1 to 5,
**characterised in that**
the second axle (4, 5) is mounted in two laterally spaced inverted V-shaped supporting elements (12, 13), each supporting element (12, 13) having two supporting arms (16, 18; 17, 19) pivotably connected to one another at their upper ends by means of a pivot joint (14, 15), the respective first supporting arm (16, 17) being connected by its lower end to the chassis (9) and the second axle (4, 5) being mounted in the lower ends of the two second supporting arms (18, 19), at least one lifting element (20) for raising and lowering being arranged on each supporting element (12, 13), which lifting element can be lifted or lowered by changing the pivot angle between the respective first and second supporting arm (16, 17; 18, 19).

7. Vehicle according to claim 6,
**characterised in that**
the respective pivot joint (14, 15) is provided with a respective locking device (25).

8. Vehicle according to claim 6 or 7,
**characterised in that**
a respective support web (21, 22) is fastened to each support arm (16, 17, 18, 19) and extends in the direction of the other support arm (22, 21) of the same support element (12, 13), a lifting element (20) being connected to at least one support web (21, 22).

9. Vehicle according to claim 8,
**characterized in that**
the support webs (21, 22) each have at the free end a guide pin (21a, 22a) that extends substantially vertically, and each lifting element (20) has at its two ends in each case a guide recess (20a, 20b), the guide pins (21a, 22a) of the support webs (21, 22) on one side engaging in the guide recesses (20a, 20b) of a lifting element (20).

10. Vehicle according to claim 9,
**characterised in that**
the guide recesses (20a, 20b) extend at least in some regions both in the longitudinal direction (10) of the vehicle and in the transverse direction (11) of the vehicle.

11. Vehicle according to one or more of claims 1 to 8,
**characterised in that**
the support webs (21, 22) of one side overlap at the ends and at least one support web end (22b) has a chamfer on the side facing the other support web end (21b).

12. Vehicle according to one or more of claims 1 to 11,
**characterised in that**
it has elements which can be telescoped in the longitudinal direction (10) of the vehicle.

13. Vehicle according to claim 12,
**characterised in that**
the telescopic elements are each provided with a locking device.

14. Vehicle according to claim 12 or 13,
**characterised in that**
the telescopic elements are formed by the support bars (21, 22).

15. Vehicle according to claim 14,
**characterised in that**
the respective lifting element (20) is suspended from the associated supporting elements (12, 13) and is pivotably articulated to a supporting web (21, 22).

16. Vehicle according to one or more of claims 1 to 15,
**characterised in that**
at least one axle (3; 4, 5) is configured as a steering axle.

## Revendications

1. Véhicule avec au moins deux axes avec chacun au moins une roue pour le levage, le transport et l'abaissement de supports de charge (2), dans lequel un premier axe (3) est monté dans un châssis (9), dans lequel des éléments de levage (20) sont prévus pour le levage et l'abaissement des supports de charge (2), dans lequel la distance du second axe (4, 5) par rapport au premier axe (3) peut être modifiée dans la direction longitudinale de véhicule (10) horizontale et dans lequel les éléments de levage (20) sont levés ou abaissés en modifiant la distance entre le second axe (4, 5) et le premier axe (3),
et dans lequel
l'au moins une roue (6) du premier axe (3) peut être entraînée par un moteur d'entraînement qui est agencé sur le châssis (9), **caractérisé en ce qu'**au moins un élément de levage (20) est déplacé horizontalement vers l'intérieur ou l'extérieur dans la direction transversale de véhicule (11) en modifiant la distance entre le second axe (4, 5) et le premier axe (3).

2. Véhicule selon la revendication 1,
**caractérisé en ce**
**qu'**au moins le second axe présente deux sections d'axe séparées (4, 5) avec respectivement une roue (7, 8).

3. Véhicule selon la revendication 1 ou 2,
**caractérisé en ce**
**qu'**au moins un élément de levage (20) est prévu de chaque côté.

4. Véhicule selon l'une quelconque ou plusieurs des revendications 1 à 3, **caractérisé en ce**
**qu'**au moins un entraînement de réglage (26) agissant horizontalement est associé au second axe (4, 5).

5. Véhicule selon l'une quelconque ou plusieurs des revendications 1 à 4, **caractérisé en ce**
**que** les roues (7, 8) du second axe (4, 5) sont respectivement pourvues d'un appareil de verrouillage (24).

6. Véhicule selon l'une quelconque ou plusieurs des revendications 1 à 5, **caractérisé en ce**
**que** le second axe (4, 5) est monté dans deux éléments de support en forme de V inversé (12, 13) espacés latéralement l'un de l'autre, dans lequel chaque élément de support (12, 13) présente deux bras de support (16, 18 ; 17, 19) reliés de manière pivotante l'un à l'autre aux extrémités supérieures via une articulation pivotante (14, 15), dans lequel le premier bras de support respectif (16, 17) est relié par son extrémité inférieure au châssis (9) et le second axe (4, 5) est monté dans les extrémités inférieures des deux seconds bras de support (18, 19), dans lequel au moins un élément de levage (20) pour le soulèvement et l'abaissement est agencé sur chaque élément de support (12, 13), lequel élément de levage peut être soulevé ou abaissé en modifiant l'angle de pivotement entre les premier et second bras de support respectifs (16, 17 ; 18, 19).

7. Véhicule selon la revendication 6,
**caractérisé en ce**
**que** l'articulation pivotante (14, 15) respective est pourvue respectivement d'un appareil de verrouillage (25).

8. Véhicule selon la revendication 6 ou 7,
**caractérisé en ce**
**que** respectivement une bande de support (21, 22) est fixée à chaque bras de support (16, 17, 18, 19), laquelle s'étend en direction de l'autre bras de support (22, 21) du même élément de support (12, 13), dans lequel un élément de levage (20) est relié à au moins une bande de support (21, 22).

9. Véhicule selon la revendication 8,
**caractérisé en ce**
**que** les bandes de support (21, 22) présentent chacune à l'extrémité libre une broche de guidage (21a, 22a) partant sensiblement verticalement et **en ce que** chaque élément de levage (20) présente à ses deux extrémités respectivement un évidement de guidage (20a, 20b), dans lequel les broches de guidage (21a, 22a) des bandes de support (21, 22) d'un côté s'engagent dans les évidements de guidage (20a, 20b) d'un élément de levage (20).

10. Véhicule selon la revendication 9,
**caractérisé en ce**
**que** les évidements de guidage (20a, 20b) s'étendent au moins par zones aussi bien dans la direction longitudinale de véhicule (10) que dans la direction transversale de véhicule (11).

11. Véhicule selon l'une quelconque ou plusieurs des revendications 1 à 8, **caractérisé en ce**
**que** les bandes de support (21, 22) d'un côté se chevauchent du côté des extrémités et **en ce qu'**au moins une extrémité de bande de support (22b) présente un biseau sur le côté faisant face à l'autre extrémité de bande de support (21b).

12. Véhicule selon l'une quelconque ou plusieurs des revendications 1 à 11, **caractérisé en ce**
**qu'**il présente des éléments réalisés de manière télescopique dans la direction longitudinale de véhicule (10).

13. Véhicule selon la revendication 12,
**caractérisé en ce**
**que** les éléments réalisés de manière télescopique sont respectivement pourvus d'un appareil de verrouillage.

14. Véhicule selon la revendication 12 ou 13,
**caractérisé en ce**
**que** les éléments réalisés de manière télescopique sont formés par les barres de support (21, 22).

15. Véhicule selon la revendication 14,
**caractérisé en ce**
**que** l'élément de levage respectif (20) est suspendu aux éléments de support associés (12, 13) et est articulé de manière pivotante sur une bande de support (21, 22).

16. Véhicule selon l'une quelconque ou plusieurs des revendications 1 à 15, **caractérisé en ce**
**qu'**au moins un axe (3 ; 4, 5) est réalisé en tant qu'axe de direction.
